# EUROPÄISCHE PATENTSCHRIFT

(11) **EP 2 651 850 B1**
(45) Veröffentlichungstag und Bekanntmachung des Hinweises auf die Patenterteilung: **25.01.2017**
(21) Anmeldenummer: 11788818.0
(22) Anmeldetag: 28.11.2011
(51) Int. Cl.: C04B 28/26

(54) **PULVERFÖRMIGER PFLASTERFUGENMÖRTEL**
PULVERULENT PAVING JOINT MORTAR
MORTIER DE JOINTOIEMENT PULVÉRULENT POUR PAVÉS

(30) Priorität: 15.12.2010 EP 10195069
(43) Veröffentlichungstag der Anmeldung: 23.10.2013
(73) Patentinhaber: Construction Research & Technology GmbH, 83308 Trostberg (DE)
(72) Erfinder: KAISER, Robert, 89331 Burgau (DE); GRAF, Wilhelm, 86199 Augsburg (DE)
(74) Vertreter: BASF IP Association
(86) Internationale Anmeldenummer: PCT/EP2011/071109
(87) Internationale Veröffentlichungsnummer: WO 2012/079963

(56) Entgegenhaltungen:
- EP-A1- 1 892 228
- GB-A- 2 451 120
- JP-A- 2 285 103

## Beschreibung

Die vorliegende Erfindung betrifft einen pulverförmigen Pflasterfugenmörtel, welcher Wasserglaspulver, Gummimehl, Füllstoff und ggf. Wasserglashärter und weitere Komponenten enthält.

Unter Pflasterfugenmörtel versteht der Fachmann einen Fugenmörtel, welcher vorwiegend im Außenbereich, insbesondere zum Verfugen von Pflastersteinen, Natursteinen und Natursteinplatten, Betonsteinplatten und Betonpflastersteinen, Mosaikböden und Mosaikpflastern, Verbundsteinen, Steinplatten, Gehwegplatten, Großsteinpflaster und Kleinpflaster, Kopfsteinpflaster, Findlingen, Holzpflaster und Holzplatten sowie Klinkerbelägen eingesetzt wird. Solche Pflaster werden beispielsweise für Fußgängerzonen, Strassen, Fußwege, Radwege, Einfahrten, Rinnsteine, Parkplätze wie auch im Gartenbau eingesetzt und vorwiegend von Gartenbauern und Straßenarbeitern in der Regel mittels der so genannten "ungebundenen Bauweise" eingebracht, welche die am häufigsten verwendete und auch klassische Konstruktionsweise für diese Beläge ist. Dabei werden die zu verlegenden Steine auf ein "loses" Bett aus Splitt, Sand oder Granulat gesetzt und anschließend verfugt. Die Fugenbreite kann von wenigen Millimetern bis teilweise zu einigen Zentimetern reichen.

An die Fugenmaterialien für Pflasterflächen werden besondere Anforderungen gestellt. Aufgrund der Platzierung der Pflastersteine im losen Verlegebett führen schon geringe Belastungen, wie z. B. leichter Geh- und Fahrverkehr, zu Bewegungen der Pflastersteine und damit einhergehend zu Veränderungen der Fugendimensionen. Darüber hinaus sollte die Pflasterfläche grundsätzlich wasserdurchlässig sein. Da ein stabiles Gefälle nicht auf Dauer realisierbar ist, muss die Drainung über die Fugen erreicht werden, um eine Pfützenbildung auf dem Pflasterfläche zu verhindern. Weiterhin ist es Aufgabe der Fugenfüller, einen pflanzlichen Aufwuchs zu verhindern, der auf Pflasterflächen schon aus ästhetischen Gründen unerwünscht ist.

Als Fugenmaterial für Pflasterflächen wird vor allem Sand eingesetzt, welcher beispielsweise mit einem Besen eingetragen wird. Dieser passt sich problemlos Veränderungen der Fugendimensionen an, welche durch Bewegungen der Platten wie auch des Untergrundes hervorgerufen werden. Eine darauf basierende Ausführungsform wird in der EP 1 484 295 A1 beschrieben, wobei dem Sand noch ein geringer Anteil an Faserstoffen zugemischt wird. Nachteilig ist hierbei, dass lose, also ungebundene Fugenmaterialien, im Laufe der Zeit aus der Fuge gewaschen oder z.B. durch Kehrmaschinen abgesaugt wird. Als Folge kann das Pflaster seinen Halt verlieren. Außerdem kann Unkraut in diesen Fugen bei geringem Verkehr wachsen, was insbesondere bei Natursteinpflastern oft als störend empfunden wird.

Die JP 2285103 beschreibt die Verwendung von Quarzsand und Gummi-Pulver als Aggregate und eine Styrolacrylat-Copolymer-Dispersion und Portlandzement als Bindemittel für Pflasterfugen. Das Fugenfüllmaterial wird zunächst zu einer pastösen Masse angemischt, auf dem Pflaster verteilt und anschließend die Fugen damit gefüllt. Die Oberfläche wird nachher mit einem Reinigungsmittel besprüht und mit einer Poliermaschine gereinigt. Dieses Fugenmaterial besteht vor dem Vermischen aus zwei Komponenten und muss daher zuerst im geeigneten Mischungsverhältnis gut angerührt werden, was ein zusätzlicher Aufwand bedeutet und wobei auch die Möglichkeit zu Mischfehlern besteht, insbesondere hinsichtlich der richtige Anteile der Einzelkomponenten zueinander. Zudem ist der anschließende Reinigungsprozess aufwändig in der Durchführung und durch Restanhaftungen des Bindemittels kann es zu Verfärbungen der Pflasteroberflächen kommen.

EP 1892228 schlägt die Verwendung von redispergierbaren Polymerpulvern in Pflasterfugenmörteln vor, wobei der Pflasterfugenmörtel einen Anteil an mineralischen Bindemittel von 0,5 bis 30 Gew.-%, an Zuschlagstoffen 30 bis 99 Gew.-%, an in Wasser redispergierbaren Polymerpulvern 0,5 bis 20 Gew.-% und an weiteren Komponenten 0 bis 25 Gew.-% aufweist. Derartige Plasterfugenmörtel haben jedoch den Nachteil, dass nur eine geringe Volumenbeständigkeit aufweisen, wobei der Pflasterfugenmörtel schwindet und er sich aus der Fuge lösen kann. Darüber hinaus hat sich gezeigt, dass die Flexibilität solcher Fugenmörtel nicht ausreicht, um zuverlässig die Rissbildung zu verhindern.

EP 1918263 beschreibt einen Pflasterfugenmörtel umfassend Alkalisilikate und redispergierbare Polymerpulver sowie anorganische Füllstoffe, insbesondere Quarzsand. Der Pflasterfugenmörtel kann weiterhin bis zu 50 Gew.-% Zement enthalten. Nachteilig ist hierbei jedoch, dass der erfindungsgemäße Pflasterfugenmörtel eine geringe Festigkeit und ungenügende Flexibilität aufweist. Weiterhin ist die Drainagefähigkeit nicht oder nicht ausreichend vorhanden.

Die GB 2451120 beschreibt pulverförmige Pflasterfugenzusammensetzungen umfassend inter alia Wasserglaspulver, redispergierbares Polymerpulver, Sand als Füllstoff sowie Calcium- oder Aluminiumhydroxide.

Die bekannten zementbasierten Pflasterfugenmörtel haben den Nachteil, dass sie die Oberfläche des Pflasters stark verschmutzen und die Verschmutzungen nur aufwendig entfernt werden können.

Aufgabe der vorliegenden Erfindung war es deshalb, einen pulverförmigen Pflasterfugenmörtel für die ungebundene Bauweise bereitzustellen, welcher schnell und einfach verarbeitet werden kann und nach dem Aushärten eine hohe Festigkeit über die gesamte Fugentiefe aufweist sowie drainagefähig ist. Weiterhin sollte die gebildete Pflasterfuge eine gute Wasserfestigkeit aufweisen. Insbesondere sollte das Fugenmaterial eine hohe Flexibilität besitzen, so dass es auch unter der Einwirkung von Spannungen, insbesondere durch thermische und mechanische Belastungen sowie unter der Einwirkung von Feuchtigkeit nicht zu Rissen, Ablösungen oder Abtrag kommt.

Gelöst wurde diese Aufgabe durch einen pulverförmigen Pflasterfugenmörtel enthaltend 0,5 bis 50 Gew.-% eines Wasserglaspulvers, 3 bis 60 Gew.-% Gummimehl, 10 bis 95 Gew.-% Füllstoff und 0 bis 20 Gew.-% weitere Komponenten.

In einer bevorzugten Ausführungsform enthält der pulverförmige Pflasterfugenmörtel 0.5 bis 20 Gew.-% eines Wasserglaspulvers, 0,1 bis 10 Gew.-% eines Wasserglashärters, 5 bis 50 Gew.-% Gummimehl, 45 bis 90 Gew.-% Füllstoff und 0 bis 10 Gew.-% weitere Komponenten.

Die Angabe Gew.-% bezieht sich hierin stets, sofern nicht explizit anderes angegeben, auf das Gesamtgewicht der Baustoffmischung in trockenem Zustand, d. h. vor Zugabe einer Anmachflüssigkeit. Die Gew.-%-Angaben aller Komponenten einer Baustoffmischung addieren sich zu 100 Gew.-%.

Abgesehen davon, dass die Aufgabenstellung in Bezug auf sämtliche Vorgaben vollständig erfüllt werden konnte, hat sich überraschenderweise herausgestellt, dass der erfindungsgemäße Pflasterfugenmörtel eine rasche, dauerhafte und ausgesprochen gute Verbundfestigkeit des Pflasters gewährleistet, wobei er schnell erhärtet und das damit verlegte Pflaster aùch bei ungünstigen Umgebungsbedingungen, wie hoher Luftfeuchtigkeit und niedriger Temperatur, rasch belastbar ist. Überraschend wurde weiterhin gefunden, dass sich der erfindungsgemäße Pflasterfugenmörtel aufgrund seiner Flexibilität und guten Flankenhaftung insbesondere auch für schmale Fugen sehr gut eignet.

Wassergläser werden durch Schmelzen von Quarzsand mit Soda (Natron-Wasserglas) oder mit Pottasche (Kali-Wasserglas) bei Temperaturen von 1300-1500°C hergestellt. Die durch Abkühlen der Schmelze erhaltenen "Stückengläser" haben in kaltem Wasser eine sehr geringe Lösegeschwindigkeit. Die "Stückengläser" werden daher unter Druck in rotierenden Lösetrommeln mit Wasser gelöst. Auf diese Weise erhält man farblose Lösungen, die nach der Filtration als flüssige Wassergläser in den Handel kommen. In vielen Anwendungsbereichen, in denen festes Alkalisilikat mit guter Kaltwasserlöslichkeit gefordert ist, können pulverisierte "Stückengläser" nicht eingesetzt werden. Man verwendet amorphe, wasserhaltige Alkalisilikat-Pulver. Diese hydratisierten Alkalisilikat-Pulver oder Wasserglaspulver sind eingedampfte Alkalisilikat-Lösungen. Das Verdampfen des Wassers erfolgt entweder auf einem Walzentrockner oder durch Trocknung in Sprühtürmen mit Düsen oder Turbinen im Gleich- oder Gegenstromverfahren aus konzentrierten Wasserglas-Lösungen. Der Trocknungsprozess führt zu Produkten mit 5 % bis ca. 20% Restwasser im Trockenprodukt. Hergestellt werden überwiegend Natriumdi- und Natriumtrisilikate, sowie Kombinationen mit anderen Komponenten wie Soda und Kaliumtrisilikaten mit Schüttdichten von 80 bis 900 kg pro m³ und unterschiedlichen Sieblinien. Je nach Verfahrenswahl erhält man ein feines, selbstfließendes Pulver oder gebrochenes Korn.

Auf dem Markt sind solche Produkte z. B. unter dem Handelsnamen Simet^{®}, Sikalon^{®} oder Portil^{®} zu finden.

Bei dem Wasserglaspulver, das in der vorliegenden Erfindung Verwendung findet, kann es sich bevorzugt um Natrium-Wasserglaspuver mit einem Gehalt an Na₂O von 15 bis 35 Gew.-%, einem SiO₂-Gehalt von 45 bis 75 Gew.-%, einem Wassergehalt von 5 bis 22 Gew.-% und einer Schüttdichte von 60 bis 750 g/l handeln. Weiter bevorzugt sind Kalium-Wasserglaspulver mit einem Gehalt an K₂O von 20 bis 50 Gew.-%, insbesondere 25-35 Gew.-%, einem SiO₂-Gehalt von 40 bis 75 Gew.-%, insbesondere 45 bis 65 Gew.-%, einem Wassergehalt von 5 bis 22 Gew.-%, insbesondere 5 bis 15 Gew.-% und einer Schüttdichte von 60 bis 750 g/l, insbesondere 200 bis 900 g/l. Die berechneten Molverhältnisse von SiO₂ : M₂O dieser Pulver liegen dabei zwischen 1 und 5. Dabei steht M für Kalium oder Natrium. Mischungen beliebiger Art von verschiedenen Wassergläsern können gegebenenfalls auch verwendet werden. Bevorzugt werden aufgrund des niedrigeren pH-Wertes der bei Mischen mit Wasser entstehenden Lösungen Module im Bereich von 2,5 bis 4.

Das Wasserglaspulver wird in dem Pflasterfugenmörtel unabhängig von den anderen Komponenten bevorzugt in einem Bereich von 0,5 bis 50 Gew.-%, weiter bevorzugt in einem Bereich von 0,5 bis 20 Gew.-%, und am meisten bevorzugt in einem Bereich von 1 bis 15 Gew.-% eingesetzt. Weitere bevorzugte Bereiche für die Menge an Wasserglaspulver sind mindestens 1 Gew.-%, insbesondere im Bereich von 1 bis 10 Gew.-%, weiter bevorzugt von 1,5 bis 8 Gew.-% und am meisten bevorzugt von 2 bis 6 Gew.-%. Insbesondere bevorzugt handelt es sich um ein Wasserglaspulver auf Basis von Kaliumwasserglas.

Wegen der mangelnden Wasserbeständigkeit reiner Wasserglas-Bindemittel kombiniert man Wassergläser bevorzugt mit Stoffen, die durch Reaktion zu einer Umsetzung mit der im Wasserglas vorhandenen Kieselsäure befähigt sind, fällend auf die gelöste Kieselsäure wirken und parallel dazu ganz oder teilweise in das Netzwerk aus den entstehenden Polykieselsäure eingebaut werden und dadurch die Wasserbeständigkeit der Bindung bewirken. Im Fachjargon werden diese Stoffe vom Fachmann gerne als Wasserglashärter bezeichnet.

Als Wasserglashärter kann jede beliebige Verbindung verwendet werden, die dem Fachmann als Wasserglashärter bekannt ist. Es kann es sich um ein Metallsalz aus der Gruppe Metallhydroxid, Metalloxid, kohlenstoffhaltiges Metallsalz, schwefelhaltiges Metallsalz, stickstoffhaltiges Metallsalz, phosphorhaltiges Metallsalz und/oder Halogenhaltiges Metallsalz handeln. Insbesondere kann es sich bei dem Härter um eine organische Säure, wie beispielsweise Glykolsäure, Ascorbinsäure, Weinsäure, Bernsteinsäure und/oder Zitronensäure handeln. Bevorzugt werden jedoch anorganische Säuren wie Kieselsäure, Borsäure, Natriumtrichloracetat, und besonders bevorzugt werden anorganische Salze eingesetzt, wie Phosphat- oder Polyphosphatsalz (Phosphathärter), wie beispielsweise ein Aluminiumphosphat oder -polyphosphat, Zinkhexafluorosilikat, Magnesiumhexafluorosilikat und/oder Natriumhexafluorosilikat. Auch Mischungen verschiedener Säuren, insbesondere der oben genannten Säuren, sind möglich.

Bevorzugt wird der Wasserglashärter unabhängig von den anderen Komponenten in einer Menge von 0,1 bis 10 Gew.-%, weiter bevorzugt in einer Menge von 0,5 bis 8 Gew.-%, noch weiter bevorzugt in einer Menge von 0,5 bis 5 Gew.-% zugegeben.

Bei Bedarf kann die Festigkeit und Abbindegeschwindigkeit des neuartigen Pflasterfugenmörtels noch gesteigert werden, wenn der Mörtel reaktionsfähiges, also feinteiliges und amorphes SiO₂ im Stoffgemisch enthält. Geeignete SiO₂-Modifikationen sind neben technisch hergestellter feinteilig-amorpher Kieselsäure, die beispielsweise durch Flammenhydrolyse aus Tetrachlorsilan hergestellt wird (Aerosil-Verfahren) oder aus gefälltem Kieselgel gewonnen wird, auch sogenannte latent hydraulische Zusätze wie Metakaolin, Filterstäube, Hüttensand etc. oder die aus natürlichen Lagerstätten gewonnenen und aufbereiteten Sedimente, wie z. B. Diatomeenerde. Durch die zugegebene Menge dieser Stoffe kann die Geschwindigkeit der Festigkeitsentwicklung und die Endfestigkeit des Mörtels gezielt gesteuert werden.

Die Menge und Art an Wasserglashärter und reaktionsfähigem SiO₂ kann auf die gegebenen Bedingungen, wie beispielsweise Temperatur oder Feuchtigkeit, eingestellt werden. Hierdurch ist es insbesondere möglich, durch die Zugabe dieser Komponenten einen Pflasterfugenmörtel bereitzustellen, dessen Mörtel auch noch bei geringeren Temperaturen innerhalb einer akzeptablen Zeit aushärten kann. Beispielsweise kann somit ein Mörtel bereit gestellt werden, der bei Temperaturen knapp oberhalb des Gefrierpunktes, wie Temperaturen im Bereich von 0 bis 10 °C aushärtet, beispielsweise innerhalb eines Tages.

In einer bevorzugten Ausführungsform der vorliegenden Erfindung wird eine Baustoffmischung bereitgestellt, die 3 bis 10 Gew.-% eines Wasserglaspulvers, 0,1 bis 3 Gew.-% eines Wasserglashärters, 5 bis 50 Gew.-% Gummimehl, 45 bis 90 Gew.-% Füllstoff, 0,5 bis 10 Gew.-% amorphes alkalisch aktivierbares SiO₂ und 0 bis 10 Gew.-% weitere Komponenten enthält.

Zur Erhöhung der Drainfähigkeit des Mörtels und zur Steigerung des Füllgrades der Fugenräume können Treibmittel enthalten sein. Als Treibmittel zur Erzeugung von Hohlräumen können Stoffe zugemischt werden, die durch Reaktion mit dem alkalischen Milieu Gase entwickeln. Geeignet sind z. B. anorganische Peroxyde wie Natriumpercarbonat oder -perborat, Wasserstoffperoxid, Siliciumpulver oder Aluminiumpulver. Der Zerfall der Peroxide kann durch bestimmte Metalloxide/-salze wie z. B. Manganoxid oder Kaliumpermanganat beschleunigt werden, so dass das Wirkung der Stoffgemische sehr genau eingestellt werden kann. Die Treibmittel werden vorzugsweise in Mengen zwischen 0,05 bis 5%, bezogen auf das Gesamtstoffgemisch, eingesetzt.

Armierende Füllstoffe wie z. B. die verschiedenen Glimmer und andere Schichtsilikate, Wollastonit oder die unter der Bezeichnung Plastorit, Sillitin und Micaplast bekannten Mineralgemenge sind als Füllstoffe besonders geeignet. Organische Füllstoffe sind als Zuschlag ebenfalls geeignet, werden aber nicht bevorzugt.

Zur Verbesserung der inneren Festigkeit können armierende Fasern aus Glas, Basalt, Hüttenwolle, Aluminiumoxyd, Asbest, aber auch Fasern aus Zellulose und organischen Polymeren der Stoffmischung beigemischt werden. Solche Fasern, die durch die hohe Alkalität des Stoffgemisches nicht angegriffen werden, sind bevorzugt.

Durch die Zugabe eines Komplexierungsmittels zu der Wasserglasmischung können Ionen komplexiert werden, welche die Reaktion zum Aushärten des Wässerglaspulvers nachteilig beeinflussen. Ein Beispiel hierfür sind Calcium-Ionen, die äußerst schnell mit Wasserglas in einer Konkurrenzreaktion zur gewünschten Aushärtereaktion reagieren. Durch die Zugabe eines Komplexierungsmittels lässt sich somit die Aushärtung besser kontrollieren, da störende Ionen, selbst wenn sie in zuvor unbekannter Menge vorliegen, durch das Komplexierungsmittel abgefangen werden.

Ein großer Teil der Mischung kann aus Füllstoffen bestehen. Diese liegen unabhängig von den anderen Komponenten bevorzugt in einer Menge von 10 bis 95 Gew.-%, insbesondere 75 bis 90 Gew.-% vor. Bevorzugt handelt es sich um mindestens einen Füllstoff aus der Reihe Kreide, Quarzsand, Quarzmehl, Calcit, Dolomit, Talkum, Kaolin, Glimmer, Schwerspat und Bimsmehl.

Gummimehl wird im Hinblick auf die vorliegende Erfindung nicht zu den Füllstoffen gerechnet. Gummimehl wird unabhängig von den anderen Komponenten bevorzugt in einer Menge von 3 bis 60 Gew.-% und besonders bevorzugt in einer Menge von 4 bis 10 Gew.-% in der erfindungsgemäßen Mischung eingesetzt. Das Gummimehl ist vorzugweise auf Basis von Recyclinggummi, Naturkautschuk oder Styrol-Butadien-Kautschuk hergestellt oder besteht daraus. Der Korndurchmesser des Gummimehls kann zwischen 0,01 und 4 mm, insbesondere zwischen 0,01 und 1,0 mm und besonders bevorzugt zwischen 0,01 und 0,6 mm liegen. Der Korndurchmesser wird mittels Lasergranulometrie bestimmt.

Bei den weiteren Komponenten kann es sich um mindestens eine aus der Reihe Verdicker, Dispergiermittel, Rheologieverbesserer, Entschäumer und Pigmente handeln.

Weiterhin ist es auch möglich dem erfindungsgemäßen Pflasterfugenmörtel ein Dispersionspulver zuzusetzen. Das Dispersionspulver basiert auf Kunststoffdispersionen, die in geeigneter Weise, vorzugsweise durch Sprühtrocknung erhalten werden. Diese Kunststoffdispersionen können aus geeigneten Homo- oder Copolymeren oder Abmischungen derselben aufgebaut sein. Geeignete Copolymere sind beispielsweise Copolymere auf Basis von Vinylacetat, Ethylen-Vinylacetat, Ethylen-Vinylacetat-Vinylversatat, Ethylen-Vinylacetat-Vinylchlorid, Ethylen-Vinylchlorid, Vinylacetat-Vinylversatat, Ethylen-Vinylacetat-(Meth)acrylat, Vinylacetat-Vinylversatat-(Meth)acrylat, (Meth)acrylat, Styrol-Acrylat und/oder Styrol-Butadien, wobei Vinylversatat ein C₄ - C₁₂-Vinylester ist und die Polymerisate 0 bis 50 Gew.-%, insbesondere 0 bis 30 Gew.-%, weitere Monomere enthalten können, insbesondere Monomere mit funktionellen Gruppen. Insbesondere sind Dispersionspulver auf Basis von Vinylacetat, Ethylen und Vinylversatat geeignet, wobei die Dispersionspulver bevorzugt in einer Menge von 1 bis 10 Gew.-% eingesetzt werden. Solche Dispersionspulver auf Basis von getrockneten Kunststoffdispersionen sind im Handel erhältlich.

Bevorzugt handelt es sich bei dem Pflasterfugenmörtel um ein 1-Komponentensystem in Form eines Trockenmörtels. Die im Pflasterfugenmörtel enthaltenen Bestandteile können in üblicher Weise vermischt und dann zu entsprechenden Gebinden abgefüllt werden.

Ein weiterer Aspekt der vorliegenden Erfindung betrifft ein Verfahren, wobei der erfindungsgemäße Pflasterfugenmörtel in Pulverform in die Pflasterfuge eingebracht wird und anschließend mit Wasser übergossen wird. Für den Wassereintrag über die Oberfläche eignen sich vor allem Methoden, bei denen der eingestreute oder eingefegte Pflasterfugentrockenmörtel nicht beschädigt wird. So wird ein sanfter Eintrag des Wassers in Form eines Sprühnebels und/oder einer Oberflächenbewässerung bevorzugt. Der Art und Weise des Wassereintrages sind keine Grenzen gesetzt, solange sie den eingetragenen Pflasterfugenmörtel nicht beschädigen. Dies kann beispielsweise mit einem Rasensprenger, einem Wassersprenger, einem Gartenschlauch mit oder ohne Verteilerdüse und/oder einer Gießkanne erfolgen. Es ist von Vorteil, dass die Dauer der Bewässerung so gewählt wird, dass das Wasser möglichst durch den ganzen Pflasterfugentrockenmörtel dringen kann, so dass der Mörtel bis in den Untergrund genügend Wasser zur Hydratation hat. Wird zuviel Wasser zugegeben, versickert das überschüssige Wasser in dem Untergrund, was in der Regel keine negativen Folgen hat. Falls zuwenig Wasser zugegeben wird, wird nur der obere Teil des Pflasterfugenmörtels hydratisiert. Bei späterer Bewässerung, sei es künstlich oder durch Regen oder Tau, kann dann weiteres Wasser durch den oberflächlich abgebundenen Mörtel in tiefere Schichten vordringen. Es ist jedoch auch möglich, dass Wasser durch den Untergrund in den Pflasterfugentrockenmörtel gelangen kann und somit eine Hydratation bewirkt.

In einer weiteren Ausführungsform wird der pulverförmige Pflasterfugenmörtel zunächst mit Wasser zu einem Mörtel verarbeitet und nachfolgend in die Pflasterfuge eingebracht. Bei dieser Variante ist es vorteilhaft, wenn die Wassermenge so eingestellt wird, dass der angerührte Mörtel eine gut zu verarbeitende Konsistenz erhält, um gut in die Fugen eingebracht werden zu können. Die Viskosität darf aber nicht zu niedrig sein, um ein davon fließen zu vermeiden.

Ein besonderer Vorteil der vorliegenden Erfindung ist die Eignung des erfindungsgemäßen Pflasterfugenmörtels für schmale Fugen. Es wird deshalb auch ein Verfahren vorgesehen, wobei die Plasterfuge eine Breite von weniger als 5 mm aufweist.

Insgesamt wird mit der vorliegenden Erfindung ein pulverförmiger Pflasterfugenmörtel vorgeschlagen, welcher einfach verarbeitet werden kann und nach dem Aushärten eine hohe Festigkeit über die gesamte Fugentiefe aufweist sowie drainagefähig ist. Weiterhin weist die gebildete Pflasterfuge eine gute Wasserfestigkeit auf, wobei das Fugenmaterial eine hohe Flexibilität besitzt und eine rasche, dauerhafte und ausgesprochen gute Verbundfestigkeit des Pflasters gewährleistet. Der erfindungsgemäße Pflasterfugenmörtel eignet sich insbesondere auch für schmale Fugen.

Die nachfolgenden Beispiele verdeutlichen die Vorteile der vorliegenden Erfindung.

### Beispiele

**Plasterfugenmörtel 1 (erfindungsgemäß):**

| | |
|---|---|
| Quarzsand 0,4 bis 0,8 mm | 25,0 Gew.-% |
| Quarzsand 0,6 bis 0,25 mm | 12,0 Gew.% |
| Quarzsand 0,7 bis 1,25 mm | 41,0 Gew.% |
| Kaliwasserglas Pulver, Modul 3 | 9,0 Gew.-% |
| Gummirecyclingmehl (GMP 1-60, CTC Stark) | 10,0 Gew.-% |
| Kieselsäure HDK 15 (Wacker Chemie AG) | 2,5 Gew.-% |
| Weinsäure | 0,5 Gew.% |

**Plasterfugenmörtel 2 (erfindungsgemäß):**

| | |
|---|---|
| Quarzsand 0,4 bis 0,8 mm | 34,0 Gew.-% |
| Quarzsand 0,6 bis 0,25 mm | 12,0 Gew.% |
| Quarzsand 0,7 bis 1,25 mm | 34,0 Gew.% |
| Kaliwasserglas Pulver, Modul 3 | 5,0 Gew.-% |
| Aluminiumphosphat, Härter | 1,5 Gew.% |
| Gummirecyclingmehl (GMP 1-60, CTC Stark) | 8,0 Gew.-% |
| Metakaolin | 5,5 Gew.% |

**Plasterfugenmörtel 3 (erfindungsgemäß):**

| | |
|---|---|
| Quarzsand 0,4 bis 0,8 mm | 30,0 Gew.-% |
| Quarzsand 0,6 bis 0,25 mm | 12,0 Gew.% |
| Quarzsand 0,7 bis 1,25 mm | 42,5 Gew.% |
| Kaliwasserglas Pulver, Modul 3 | 4,0 Gew.-% |
| Aluminiumphosphat, Härter | 2,0 Gew.% |
| Gummirecyclingmehl (GMP 1-60, CTC Stark) | 5,5 Gew.-% |
| Kieselsäure HDK 15 (Wacker Chemie AG) | 4,0 Gew.-% |

**Pflasterfugenmörtel 4 (Vergleich):**

| | |
|---|---|
| Quarzsand 0,4 bis 0,8 mm | 25,0 Gew.-% |
| Quarzsand 0,6 bis 0,25 mm | 10,5 Gew.% |
| Quarzsand 0,7 bis 1,25 mm | 48,0 Gew.% |
| Kaliwasserglas Pulver, Modul 3 | 9,0 Gew.-% |
| Aluminiumphosphat, Härter | 2,0 Gew.% |
| Kieselsäure HDK 15 (Wacker Chemie AG) | 0,5 Gew.-% |
| Dispersionspulver, Vinnapas 5044 N, | |
| (Wacker Chemie AG) | 5,0 Gew.% |

Die Trockenmörtel wurden durch homogenes mischen der Einzelkomponenten erhalten. Zur Prüfung der Flexibilität wurde der jeweilige Trockenmörtel auf ein Aluminiumblech mit den Maßen 50 cm x 10 cm x 0,1 cm (Länge x Breite x Dicke), das mit der wasserfesten Grundierung PCI Flächengrund 303 grundiert wurde, aufgetragen und in einer Schichtstärke von 0,5 cm mittels einer Glättkelle und mit Hilfe an den Alu-Blech-Längsseiten temporär angebrachten Kunststoffleisten abgezogen. Der so erhaltene Probekörper wurde mit einem herkömmlichen "Blumensprüher" mit Wasser so lange besprüht, bis die Oberfläche des Mörtels eine deutliche Durchnässung zeigte (keine Pfützenbildung). Dies wurde mit ca. 10 Gew.-% Wasser, bezogen auf die aufgetragene Pulvermenge, erreicht. Die Oberfläche des Probekörpers wurde gleich anschließend mit einer PE-Folie abgedeckt und das Alu-Blech an den von den Kunststoffleisten befreiten Flächen beschwert, um ein Schwundbiegen des Körpers zu verhindern. Die PE-Folie wurde nach 24h entfernt und der Probekörper weitere 6 Tage bei 23°C und 50% rel. Feuchtigkeit gelagert.

Nach der Lagerung wurden die Beschwerung und die Folie entfernt und der Körper auf einen ebenen Untergrund gelegt. Mittig wurde nun ein Distanzkörper mit den Maßen 10 cm x 2 cm (Länge x Breite) und unterschiedlicher Dicke gelegt. Der Probekörper wurde an beiden Enden händisch auf dem Untergrund gedrückt, so dass ein zum Distanzkörper gerichteter Bogen entstand. Visuell wurde die Oberfläche des Probekörperbogens auf Rissbildung geprüft. Die Dicke des Distanzkörpers, bei dem erste Risse sichtbar sind wird festgehalten.

### Ergebnis:

| Pflasterfugenmörtel | Rissbildung bei Dicke Distanzkörper von |
|---|---|
| 1 | 8 mm |
| 2 | 10 mm |
| 3 | 6 mm |
| 4 | 2 mm |

## Patentansprüche

1. Pulverförmiger Pflasterfugenmörtel enthaltend
0,5 bis 50 Gew.-% eines Wasserglaspulvers,
3 bis 60 Gew.-% Gummimehl,
10 bis 95 Gew.-% Füllstoff und
0 bis 20 Gew.-% weitere Komponenten.

2. Pulverförmiger Pflasterfugenmörtel nach Anspruch 1, **dadurch gekennzeichnet,**
**dass** dieser bezogen
auf die Trockenbestandteile
0.5 bis 20 Gew.-% eines Wasserglaspulvers,
0,1 bis 10 Gew.-% eines Wasserglashärters,
5 bis 50 Gew.-% Gummimehl,
45 bis 90 Gew.-% Füllstoff und
0 bis 10 Gew.-% weitere Komponenten enthält.

3. Pulverförmiger Pflasterfugenmörtel nach Anspruch 1 oder 2, **dadurch gekennzeichnet, dass** es sich um ein Wasserglaspulver auf Basis von Kaliumwasserglas handelt.

4. Pulverförmiger Pflasterfugenmörtel nach einem der Ansprüche 1 bis 3, **dadurch gekennzeichnet, dass** das Gummimehl einen Korndurchmesser zwischen 0,01 und 4 mm aufweist.

5. Pulverförmiger Pflasterfugenmörtel nach einem der Ansprüche 1 bis 4, **dadurch gekennzeichnet, dass** das Gummimehl auf Basis von Naturkautschuk oder Styrol-Butadien-Kautschuk hergestellt ist.

6. Pulverförmiger Pflasterfugenmörtel nach einem der Ansprüche 1 bis 5, **dadurch gekennzeichnet, dass** es sich bei dem Füllstoff um mindestens einen aus der Reihe Kreide, Quarzsand, Quarzmehl, Calcit, Dolomit, Talkum, Kaolin, Glimmer, Schwerspat und Bimsmehl handelt.

7. Pulverförmiger Pflasterfugenmörtel nach einem der Ansprüche 1 bis 6, **dadurch gekennzeichnet, dass** es sich bei den weiteren Komponenten um mindestens eine aus der Reihe alkalisch aktivierbares Alumosilikat, Verdicker, Dispergiermittel, Rheologieverbesserer, Entschäumer, Zusatzstoffe, Pigmente, organische oder anorganische Fasern handelt.

8. Pulverförmiger Pflasterfugenmörtel nach einem der Ansprüche 1 bis 7, **dadurch gekennzeichnet, dass** als weitere Komponente ein Kunststoffdispersionspulver enthalten ist.

9. Pulverförmiger Pflasterfugenmörtel nach einem der Ansprüche 1 bis 7, **dadurch gekennzeichnet, dass** alkalisch aktivierbares SiO₂, insbesondere hochdisperse Kieselsäure oder Metakaolin, enthalten ist.

10. Pulverförmiger Pflasterfugenmörtel nach einem der Ansprüche 1 bis 9, **dadurch gekennzeichnet, dass** es sich um ein 1-Komponentensystem in Form eines Trockenmörtels handelt.

11. Pulverförmiger Pflasterfugenmörtel nach einem der Ansprüche 1 bis 10, **dadurch gekennzeichnet, dass** es sich bei dem Wasserglashärter um ein Metallsalz aus der Gruppe Metallhydroxid, Metalloxid, kohlenstoffhaltiges Metallsalz, schwefelhaltiges Metallsalz, stickstoffhaltiges Metallsalz, phosphorhaltiges Metallsalz, Halogenhaltiges Metallsalz handelt.

12. Verfahren, wobei ein Pflasterfugenmörtel nach einem der Ansprüche 1 bis 11 in Pulverform in einePflasterfuge eingebracht wird und anschließend mit Wasser übergossen wird.

13. Verfahren, wobei ein Pflasterfugenmörtel nach einem der Ansprüche 1 bis 11 mit Wasser zu einem Mörtel verarbeitet wird und nachfolgend in einePflasterfuge eingebracht wird.

14. Verfahrennach einem der Ansprüche 12 oder 13, wobei die Pflasterfuge eine Breite von weniger als 5 mm aufweist.

## Claims

1. Pulverulent paving joint grout containing
from 0.5 to 50% by weight of a water glass powder,
from 3 to 60% by weight of ground rubber,
from 10 to 95% by weight of filler and
from 0 to 20% by weight of further components.

2. Pulverulent paving joint grout according to Claim 1, **characterized in that** it contains, based on the dry constituents,
from 0.5 to 20% by weight of a water glass powder, from 0.1 to 10% by weight of a water glass hardener, from 5 to 50% by weight of ground rubber,
from 45 to 90% by weight of filler and
from 0 to 10% by weight of further components.

3. Pulverulent paving joint grout according to Claim 1 or 2, **characterized in that** the water glass powder is a water glass powder based on potassium water glass.

4. Pulverulent paving joint grout according to any of Claims 1 to 3, **characterized in that** the ground rubber has a particle diameter in the range from 0.01 to 4 mm.

5. Pulverulent paving joint grout according to any of Claims 1 to 4, **characterized in that** the ground rubber has been produced on the basis of natural rubber or styrene-butadiene rubber.

6. Pulverulent paving joint grout according to any of Claims 1 to 5, **characterized in that** the filler is at least one filler selected from the group consisting of chalk, silica sand, quartz flour, calcite, dolomite, talc, kaolin, mica, barite and ground pumice.

7. Pulverulent paving joint grout according to any of Claims 1 to 6, **characterized in that** the further components are at least one component selected from the group consisting of alkali-activatable aluminosilicate, thickeners, dispersants, rheology improvers, antifoams, additives, pigments, organic or inorganic fibres.

8. Pulverulent paving joint grout according to any of Claims 1 to 7, **characterized in that** a polymer dispersion powder is present as further component.

9. Pulverulent paving joint grout according to any of Claims 1 to 7, **characterized in that** alkali-activatable SiO₂, in particular finely divided silica or metakaolin, is present.

10. Pulverulent paving joint grout according to any of Claims 1 to 9, **characterized in that** it is a 1-component system in the form of a dry grout.

11. Pulverulent paving joint grout according to any of Claims 1 to 10, **characterized in that** the water glass hardener is a metal salt selected from the group consisting of metal hydroxide, metal oxide, carbon-containing metal salt, sulphur-containing metal salt, nitrogen-containing metal salt, phosphorus-containing metal salt, halogen-containing metal salt.

12. Process, wherein a paving joint grout according to any of Claims 1 to 11 is introduced in powder form into a paving joint and water is subsequently poured over it.

13. Process, wherein a paving joint grout according to any of Claims 1 to 11 is processed with water to form a grout and subsequently introduced into a paving joint.

14. Process according to either of Claims 12 and 13, wherein the paving joint has a width of less than 5 mm.

## Revendications

1. Mortier, sous forme de poudre, de jointoiement de pavés, contenant
0,5 à 50% en poids d'une poudre de verre soluble,
3 à 60% en poids de farine de caoutchouc,
10 à 95% en poids de charge et
0 à 20% en poids d'autres composants.

2. Mortier, sous forme de poudre, de jointoiement de pavés selon la revendication 1, **caractérisé en ce qu'**il contient, par rapport aux constituants secs,
0,5 à 20% en poids d'une poudre de verre soluble,
0,1 à 10% en poids d'un durcisseur de verre soluble,
5 à 50% en poids de farine de caoutchouc,
45 à 90% en poids de charges et
0 à 10% en poids d'autres composants.

3. Mortier, sous forme de poudre, de jointoiement de pavés selon la revendication 1 ou 2, **caractérisé en ce qu'**il s'agit d'une poudre de verre soluble à base de verre soluble potassique.

4. Mortier, sous forme de poudre, de jointoiement de pavés selon l'une quelconque des revendications 1 à 3, **caractérisé en ce que** la poudre de farine de caoutchouc présente un diamètre moyen de particule entre 0,01 et 4 mm.

5. Mortier, sous forme de poudre, de jointoiement de pavés selon l'une quelconque des revendications 1 à 4, **caractérisé en ce que** la farine de caoutchouc est préparée à base de caoutchouc naturel ou de caoutchouc de styrène-butadiène.

6. Mortier, sous forme de poudre, de jointoiement de pavés selon l'une quelconque des revendications 1 à 5, **caractérisé en ce qu'**il s'agit, pour la charge, d'au moins une charge de la série craie, sable de quartz, farine de quartz, calcite, dolomite, talc, kaolin, mica, sulfate de baryum lourd et farine de pierre ponce.

7. Mortier, sous forme de poudre, de jointoiement de pavés selon l'une quelconque des revendications 1 à 6, **caractérisé en ce qu'**il s'agit, pour les autres composants, d'au moins un composant de la série aluminosilicate activable par voie alcaline, épaississants, dispersants, agents d'amélioration de la rhéologie, antimousses, additifs, pigments, fibres organiques ou inorganiques.

8. Mortier, sous forme de poudre, de jointoiement de pavés selon l'une quelconque des revendications 1 à 7, **caractérisé en ce qu'**il contient, comme autres composants, une poudre de dispersion de matériau synthétique.

9. Mortier, sous forme de poudre, de jointoiement de pavés selon l'une quelconque des revendications 1 à 7, **caractérisé en ce qu'**il contient du SiO₂ activable par voie alcaline, en particulier de la silice hautement dispersée ou du métakaolin.

10. Mortier, sous forme de poudre, de jointoiement de pavés selon l'une quelconque des revendications 1 à 9, **caractérisé en ce qu'**il s'agit d'un système à 1 composant sous forme d'un mortier sec.

11. Mortier, sous forme de poudre, de jointoiement de pavés selon l'une quelconque des revendications 1 à 10, **caractérisé en ce qu'**il s'agit, pour le durcisseur de verre soluble, d'un sel métallique du groupe hydroxyde métallique, oxyde métallique, sel métallique contenant du carbone, sel métallique contenant du soufre, sel métallique contenant de l'azote, sel métallique contenant du phosphore, sel métallique contenant un halogène.

12. Procédé, un mortier de jointoiement de pavés selon l'une quelconque des revendications 1 à 11 étant introduit sous forme de poudre dans un joint de pavé et ensuite arrosé d'eau.

13. Procédé, un mortier de jointoiement de pavés selon l'une quelconque des revendications 1 à 11 étant transformé avec de l'eau en un mortier et ensuite introduit dans un joint de pavé.

14. Procédé selon l'une quelconque des revendications 12 ou 13, le joint de pavé présentant une largeur inférieure à 5 mm.
